# EUROPEAN PATENT APPLICATION

(11) **EP 1 013 414 A2**
(43) Date of publication of application: **28.06.2000**
(21) Application number: 99122709.1
(22) Date of filing: 15.11.1999
(51) Int. Cl.: B32B 27/12, B32B 7/12, B32B 3/24, B32B 31/30, B60R 13/02

(54) **Encapsulated self adhering acoustic mat for sandwich used in vehicle interior systems**

(30) Priority: 21.12.1998 US 217181
(71) Applicant: Prince Technology Corporation, Holland, Michigan 49423 (US)
(72) Inventor: Michael, Raj S., Zeeland, Michigan 49464 (US); Erickson, Brian L., Holland, Michigan 49424 (US)
(74) Representative: Patentanwälte Dr. Solf & Zapf

(57) **Abstract**

A reinforcing mat for use in vehicle trim panels, such as a headliner or roof liner, comprising a fiber layer, first and second polymer layers on each side of the fiber layer encapsulating the fibers and an adhesive layer on at least one outer surface of the first and second polymer layers. The resulting mat is perforated or apertured in either a random or non-random fashion to provide an open mat. A method of manufacturing the mat is provided in which the polymer layers are extruded onto the fiber layer and at least one adhesive outer layer is co-extruded with one of the polymer layers. After the polymer and adhesive layers are extruded, the mat is perforated either by a punch roller or a vacuum roller which displaces the polymer and adhesive from the spaces between the fibers.

## Description

### BACKGROUND OF THE INVENTION

The present invention relates to a reinforcing mat and in particular to a mat having a fiber layer encapsulated between polymer layers with at least one adhesive outer layer. Such a reinforcing mat is useful in the manufacture of vehicle headliners and other vehicle interior panels.

Automobile headliners are typically formed as a laminate structure having a decorative outer cover attached to a laminated structural board. One method of manufacturing the laminated structural board is to utilize a semi-rigid polyurethane foam board as a core. Each side of the polyurethane board is coated with chopped fiberglass which is encapsulated between two adhesive layers. The adhesive bonds the fiberglass to the polyurethane foam board and provides outer adhesive layers. One outer adhesive layer is used to attach the decorative cover to the board. The other outer adhesive layer is typically covered with a scrim cloth to provide protection during handling of the board from any protruding glass fibers. The fiberglass layers provide reinforcement and strength to the laminated structural board.

Such a board is typically constructed upon the scrim and requires numerous process steps beginning with the application of a first adhesive layer, a layer of chopped fiber glass and a second adhesive layer. The semi-rigid polyurethane foam board is then applied to the second adhesive layer. An additional adhesive layer is applied, another layer of chopped fibers and the final adhesive layer. This structure is then cured in a lamination oven to provide laminated boards. The boards are later used in the formation of a trim panel, such as a headliner, by first heating the laminating boards in an oven to soften the adhesives. The heated board, together with a decorative cover, is placed in a forming tool to both adhere the decorative cover to the laminated board and to shape the entire structure to provide a three dimensional, contoured panel.

The present invention seeks to provide a single reinforcing mat that can be applied to each side of the semi-rigid polyurethane foam board in a single step process to produce the laminated boards as described above. One product available for doing so is a reinforcing mat which consists of a fiber layer encapsulated by polymer layers on each side. A disadvantage of using such a reinforcing material is that it is still necessary to apply adhesive layer between the reinforcing material and the polyurethane board as well as an adhesive layer between the reinforcing mat and the decorative cover. A further disadvantage of such a reinforcing material is that the polymer layers encapsulating the fiber layer act as a sound barrier and degrade the acoustic absorption characteristics of the completed panel. Much of the acoustic absorption of the finished panel is provided by the cells in the foam core. The reinforcing material acts as a sound barrier, preventing sound from reaching the foam cells.

It is one object of the present invention to provide a reinforcing mat for use in automotive interior panels which eliminates the need for application of adhesive layers during the manufacturing process.

It is a further object of the present invention to provide a reinforcing mat which provides improved acoustic absorption characteristics as compared to existing reinforcing mats.

### SUMMARY OF THE INVENTION

The present invention can be characterized as a reinforcing mat having a fiber layer encapsulated between first and second polymer layers with an adhesive layer applied to the outer surface of one or both of the polymer layers and the resulting mat having perforations or apertures therethrough to provide enhanced acoustic absorption characteristics to the interior automotive panel made with the mat. The reinforcing mat is used in the manufacture of an automotive interior panel by applying the mat to both sides of a semi-rigid polyurethane foam board. A decorative cover is applied to one surface of the laminated board. A fabric scrim may or may not be applied to the back side of the trim panel.

In an alternative embodiment, the reinforcing mat is not formed with the perforations or apertures. A non-perforated reinforcing mat can be used on the back side of the trim panel, such as the side of the headliner facing the vehicle body roof panel. Sound transmission through this reinforcing layer for absorption by the polyurethane foam board is of lesser importance.

In yet another embodiment, the reinforcing mat is formed without an adhesive outer layer. Such a reinforcing mat will require the application of an apertured adhesive layer when it is laminated to the polyurethane board.

Further objects, features and advantages of the invention will become apparent from a consideration of the following description and the appended claims when taken in connection with the accompanying drawings.

### BRIEF DESCRIPTION OF THE DRAWINGS

FIG. 1 schematically illustrates a cross sectional view of a multi-layer reinforcing mat formed in accordance with the invention with the layers separated for convenient illustration;
FIG. 2 schematically illustrates an alternative embodiment of the reinforcing mat;
FIG. 3 is a schematic diagram showing the manufacturing process for making the reinforcing mat of the present invention;
FIG. 4 is a plan view of the reinforcing mat of the present invention;
FIG. 5 is a schematic diagram illustrating the process for manufacturing laminated boards using the reinforcing mat of the present invention; and
FIG. 6 is a schematic diagram showing the manufacture of an automotive interior panel using the laminated board shown in FIG. 5.

### DETAILED DESCRIPTION OF THE PREFERRED EMBODIMENT

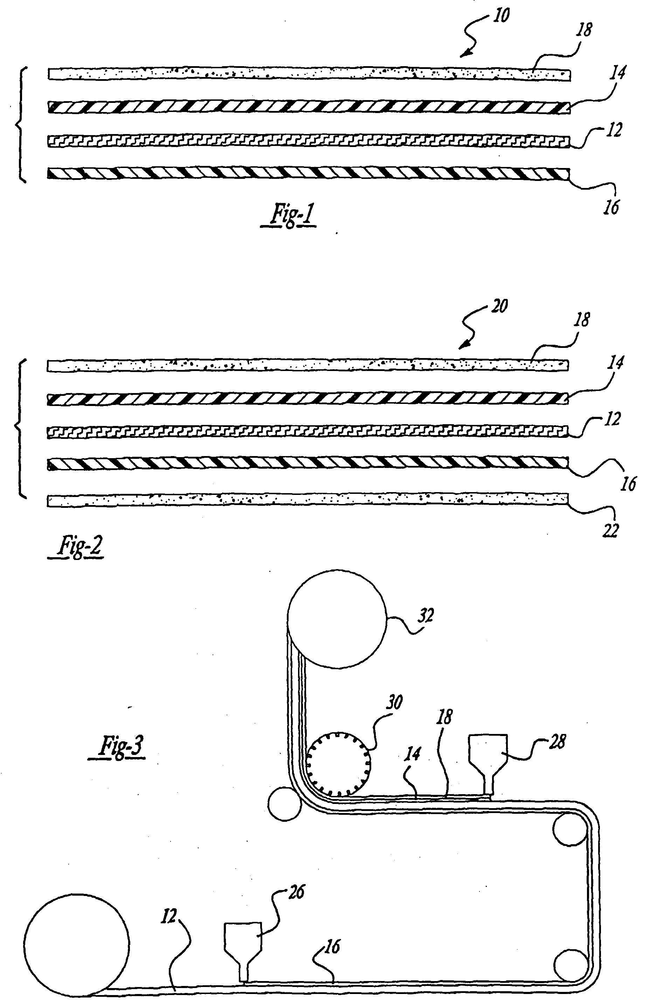

The reinforcing mat 10 of the present invention is shown in FIG. 1. The mat includes a fiber layer 12, polymer layers 14, 16 encapsulating the fiber layer 12 and an adhesive layer 18 on the outer surface of the polymer layer 14. The fiber layer consists of a plurality of randomly dispersed fibers laid in an overlapping pattern with the aspect ratio optimized for strength. The fibers are oriented in the plane of the mat. The fibers can be inorganic fibers such as glass, mineral A-glass, E-glass, S-glass or recycled glass. The fibers may also be organic fibers such as polyester, copolyester, polyolefin, copolyolefin, polyamide or cellulose. Natural fibers can also be used such as hemp, sisal, kenaf, abaca, flak, jute, rice straw, wheat straw, bamboo or silk. Organic or natural fibers range from a micro denier to 100 denier. Inorganic fibers range from 10 to 50 microns. The fiber weight ranges from 5 grams per square meter (gsm) to 500 gsm. The fiber is preferably coated with a thermoplastic or thermoset binder that softens for shaping between 50 °C and 250 °C. The fiber coating holds the fibers together in a layer prior to the application of the polymer layers 14, 16.

The fiber layer 12 is encapsulated with a reinforcing semi/crystalline polymer or blend thereof, such as polyethylene, polypropylene, grafted polyolefin or other reactive polymers. The quantity of the polymer is preferably between 5 and 250 gsm.

The outer surface of the polymer layer 14 is coated with an adhesive over-layer 18. The adhesive over-layer 18 is capable of bonding to polar and non-polar substrates such as polyurethane foam, fibrous non-woven or fibrous woven core materials. The adhesive over-layer 18 is between 5 and 250 gsm as well. The following adhesive polymers may be used, thermoplastics such as ethylene copolymers including ethylene methacrylate copolymer, ethylene acrylate copolymer, ethylene acrylic acid, ethylene methacrylic acid, ethylene styrene copolymer, ethylene alphaolefin copolymer; propylene methylacrylate grafted polymer; polyethyleneimine; polyamide (Nylon 6, Nylon 66, Nylon 612 Nylon 12), polycarbonate; acrylonitrile-styrene-butadiene terpolymer (ABS); styrene acrylonitrile (SAN); and acrylic acid, epoxy or other latex type copolymers. Thermoset adhesive polymers may be used as well such as B-stageable epoxy copolymers or lacquer chemistry co/ter polymers and B-stageable Epoxy or urethane copolymers.

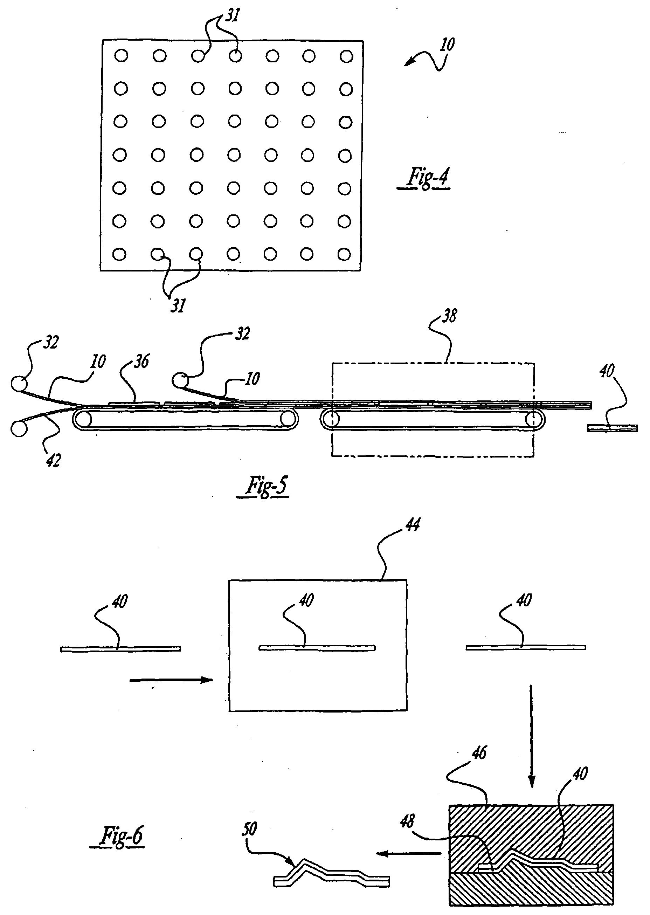

The reinforcing mat 10 is manufactured as shown in FIG. 3. The mat is first formed by laying down the fiber layer 12 from a roll. A polymer layer 16 is then applied to the fiber layer 12 by an extruder 26. A second extruder 28 applies another polymer layer 14 co-extruded with the adhesive over-layer 18 to make the reinforcing mat 10 shown in FIG. 1. If the reinforcing mat 20 shown in FIG. 2 is being manufactured, which has two opposite adhesive over-layers 18, 22, the extruder 26 co-extrudes an adhesive over-layer 22 along with the reinforcing polymer layer 16.

After the various polymer and adhesive layers have been extruded onto the fiber layer 12, the mat passes a perforating or apeturing roller 30. The roller 30 may be a punch roller that punches holes 31 into the mat in a non-random pattern. The hole density may range from 1 hole per square inch to 250 holes per square inch with the hole size ranging between 0.5 and 10 mm.

Alternatively, the perforating or aperturing roller 30 may be a vacuum roller which applies a vacuum to the mat while the various polymer and adhesive over-layers we still soft. The vacuum results in a deformation or flow in the polymer and adhesive over-layers around the fibers, producing random oriented and shaped perforations between the fibers. The polymer is displaced by the vacuum, creating hole patterns generated due to the random spaces present between the fibers in the fiber layer. This results in a mat with encapsulated fibers with an open structure that enhances the acoustic properties when the mat is used in a trim panel. The perforated or apertured reinforcing mat has an openness between 5% open and 95% open. After perforating or aperturization, the reinforcing mat is rolled into a roll 32.

The roll 32 of reinforcing mat 10 is used in the process of manufacturing an automotive interior panel such as a headliner, roof liner, door panel, instrument panel, package tray, floor reinforcement, visor, sun roof panel or seat panel. The beginning of this process is shown in FIG. 5. A first reinforcing mat 10 is laid down after which a semi-rigid polyurethane foam board 36 is applied, preferably to the adhesive layer 18 of the reinforcing mat 10.

A second layer of the reinforcing mat 10 is applied onto the other side of the board 36, again with the adhesive over-layer 18 facing and contacting the board 36. The reinforcing mats 10 and the board 36 are laminated together in a lamination oven 38 to produce laminated structural boards 40 consisting of a core with a reinforcing mat 10 on each surface of the core. The core can be made of semi-rigid polyurethane foam boards 36 or of non-woven or woven material as are known in the headliner and trim panel art.

In an alternative embodiment of the invention, the reinforcing mat 10 does not include an adhesive overlayer but consists merely of an inner fiber layer encapsulated in the polymer layers and is perforated or apertured as described above. In such an embodiment, when the reinforcing mat is applied to the core to form the laminated boards, an apertured adhesive layer is first placed between the core and the reinforcing mat.

In addition, a scrim layer 42 can be applied to one surface of the laminated board by forming the laminated board upon the scrim 42 as shown in FIG. 5. The scrim 42 is a non-woven cloth layer. Such a scrim has typically been provided on the laminated board for the purpose of providing complete covering of the chopped fibers that are applied to the core surface by adhesive layers. The scrim provides complete encapsulation of the glass fibers for the protection of personnel handling the laminated board and the completed trim panels formed therefrom. With the reinforcing mat of the present invention, in which the fibers are encapsulated in the polymer layers, the scrim 42 may not be necessary for the protection of those handling the laminated boards.

With reference to FIG. 6, a process for completing an interior panel is shown. The laminated structural board 40 is first placed into an oven 44 to soften the adhesive and the polymer layers. The heated laminate board 40 is then placed into a form tool 46 along with a precut decorative cover 48. The forming tool 46 shapes the cover and the laminated board as well as adheres the decorative cover 48 to the laminated board 40. The decorative cover 48 can be adhered by the second adhesive layer 22 on the reinforcing mat (FIG. 2) or can be adhered by the use of an additional adhesive layer between the laminated board 40 and the decorative cover 48. The resulting panel 50 can then be trimmed to the desired size for a particular automotive finished interior panel. These panels can be used for vehicle headliner, roof liner, sun roof panel, visor, rear package shelf, door panel, seat panel, floor panel or other interior panels.

In the preferred embodiment, the reinforcing mat includes both an adhesive over-layer on at least one outer surface as well as random or non-random apertures or perforations. As such, the reinforcing mat provides strength to the resulting panel by virtue of the engineered fibers, is self-adhering by virtue of the adhesive over-layer and contributes to the acoustic properties desired for the trim panel by virtue of the perforations. The reinforcing strength, the self adhesion and the acoustic properties are provided in a single engineered mat that is used to manufacture the laminated boards 40. The mat 10 thus simplifies the manufacturing process of the laminated boards 40 while also providing superior performance.

It is to be understood that the invention is not limited to the exact construction illustrated and described above, but the various changes and modifications may be made without departing from the spirit and scope of the invention as defined in the following claims. In the claims that follow, the term "perforation" is used for the openings in the mat, regardless of how the openings are formed.

## Claims

1. A reinforcing mat comprising:
a layer of fibers;
first and second polymer layers, one on each side of said fiber layer to encapsulate said fibers;
an adhesive over-layer on an outer surface of at least one of said first and second polymer layers forming said mat; and
said mat having perforations through said fiber layer, said first and second polymer layers and said adhesive over-layer.

2. The reinforcing mat as defined in claim 1 wherein said fibers are selected from the group of natural fibers, organic fibers and inorganic fibers.

3. The reinforcing mat as defined in claim 1 wherein said fibers are between a micro denier and 100 denier.

4. The reinforcing mat as defined in claim 1 wherein said fibers are coated with a thermoplastic or thermosetting polymer.

5. The reinforcing mat as defined in claim 1 wherein said fibers are randomly oriented within said mat.

6. The reinforcing mat as defined in claim 1 wherein said first and second polymer layers are selected from the group of polyethylene, polypropylene, and grafted polyolefin.

7. The reinforcing mat as defined in claim 1 wherein the quantity of polymer in said first and second polymer layers is between 5 and 250 gsm.

8. The reinforcing mat as defined in claim 1 wherein said adhesive is a thermoplastic or thermoset polymer.

9. The reinforcing mat as defined in claim 1 wherein said perforations are random between said fibers.

10. The reinforcing mat as defined in claim 1 wherein said perforations are non-random.

11. The reinforcing mat as defined in claim 10 wherein said perforations number between 1 and 250 holes per square inch.

12. The reinforcing mat as defined in claim 11 wherein said holes have a diameter between 0.5mm and 10mm.

13. The reinforcing mat as defined in claim 1 wherein said mat is 5 percent to 95 percent open due to said perforations.

14. A laminated board comprising;
a core layer; and
first and second reinforcing mats each having a layer of fibers, first and second polymer layers, one on each side of said fiber layer to encapsulate said fibers, an adhesive layer on an outer surface of at least one of said first and second polymer layers, at least one of said mats having perforations therethrough;
said first and second reinforcing mats being oriented with said adhesive layers thereof engaging said core layer and being bonded thereto to form said laminated board

15. The laminated board as defined in claim 14 further comprising a decorative cover on one side.

16. The method of making a reinforcing mat comprising the steps of:
providing a layer of fibers;
encapsulating said fiber layer between first and second polymer layers on opposite sides of said fiber layer;
applying an adhesive layer to an outer surface of at least one of said first and second polymer layers; and
perforating said layers to form a perforated mat of polymer encapsulated fibers with an adhesive over-layer.

17. The method of making a reinforcing mat as defined in claim 16 wherein said first and second polymer layers are applied to said fiber layer by extrusion of said first and second polymer layers onto said fiber layer.

18. The method of making a reinforcing mat as defined in claim 17 wherein said adhesive layer is coextruded with one of said first and second polymer layers.

19. The method of making a reinforcing mat as defined in claim 18 further comprising the step of coextruding a second adhesive layer on the other of said first and second polymer layers.

20. The method of making a reinforcing mat as defined in claim 16 wherein said perforating step is performed by punching.

21. The method of making a reinforcing mat as defined in claim 16 wherein said perforating step is performed by vacuum forming.

22. A reinforcing mat comprising:
a layer of fibers;
first and second polymer layers, one on each side of said fiber layer to encapsulate said fibers; and
an adhesive layer on an outer surface of one of said first and second polymer layers.

23. The reinforcing mat as defined in claim 22 further comprising a second adhesive layer on the outer surface of the other of said first and second polymer layers.

24. A reinforcing mat comprising:
a layer of fibers;
first and second polymer layers, one on each side of said fiber layer to encapsulate said fibers; and
said mat having perforations through said fiber layer and said first and second polymer layers.

25. The reinforcing mat as defined in claim 24 wherein said perforations are randomly oriented between said fibers.

26. The reinforcing mat as defined in claim 24 wherein said perforations are non-random.

27. The reinforcing mat as defined in claim 26 wherein said perforations number between 1 and 250 holes per square inch.

28. The reinforcing mat as defined in claim 27 wherein said holes have a diameter between 0.5mm and 10mm.

29. The reinforcing mat as defined in claim 24 wherein said mat is 5 percent 95 percent open due to said perforations.
